Europäisches Patentamt

European Patent Office

Office européen des brevets

(19)

(11) Publication number: **0 014 267**
**B1**

(12) **EUROPEAN PATENT SPECIFICATION**

(45) Date of publication of patent specification: **22.06.83**

(51) Int. Cl.³: **E 21 B 43/25, E 21 B 43/12**

(21) Application number: **79200072.1**

(22) Date of filing: **09.02.79**

(54) **Process for treating a well for starting hydrocarbon fluid production by injecting nitrogen-generating liquid.**

(43) Date of publication of application:
**20.08.80 Bulletin 80/17**

(45) Publication of the grant of the patent:
**22.06.83 Bulletin 83/25**

(84) Designated Contracting States:
**DE GB IT NL**

(56) References cited:
**FR - A - 1 295 235**
**US - A - 2 804 150**
**US - A - 3 019 839**
**US - A - 3 215 087**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Scheuerman, Ronald Fredrick**
**5322 Brae Burn Drive**
**Bellaire, Texas 77401 (US)**
Inventor: **Richardson, Edwin Allen**
**Volmerlaan 6**
**NL-2288 GD Rijswijk (NL)**

(74) Representative: **Puister, Antonius Tonnis, Mr. et al,**
**P.O. Box 302**
**NL-2501 CH The Hague (NL)**

Courier Press, Leamington Spa, England

Process for treating a well for starting hydrocarbon fluid production by
injecting nitrogen-generating liquid

The invention relates to treating a liquid-containing well by passing a nitrogen gas-generating solution into the well to cause a gas-effected displacement of liquid from the well. More particularly, it relates to "kicking off" or initiating production from a well which is "dead" due to hydrostatic pressure of the liquid it contains; without the necessity of swabbing the well, or injecting nitrogen or other gas which has been compressed at a surface location.

French patent specification 1.205.235 describes a method for treating a well communicating with a hydrocarbon fluid-containing formation from which production is prevented by the hydrostatic pressure of liquid contained in the well. In this method, sufficient liquid is displaced from the well by means of a gas which is introduced into the well together with a detergent to reduce the hydrostatic pressure to less than the reservoir fluid pressure.

Object of the invention is a method of the above type, wherein the gas is generated in the well at the hydrostatic pressure prevailing therein in a quantity that is sufficiently large to displace the liquid from the well.

According to the invention, at least one aqueous liquid solution is entered into the well, which solution forms or contains a nitrogen gas-forming mixture of (a) at least one water-soluble compound which contains at least one nitrogen atom to which at least one hydrogen atom is attached and is capable of reacting within an aqueous medium to yield nitrogen gas and by-products which are substantially inert to the components of the well and reservoir formation, (b) at least one oxidizing agent which is capable of reacting with said nitrogen-containing compound to form said gas and by-products, and (c) an aqueous liquid which is capable of dissolving or homogeneously dispersing said nitrogen-containing compound, the oxidizing agent and the by-products of the nitrogen gas-producing reaction.

In one embodiment of the invention the nitrogen gas-forming mixture is injected into a production tubing string at a rate such that the gas is formed within and accumulated at the top of the tubing string. The gas is subsequently released to initiate the production of fluid from the well and reservoir. In another embodiment of the invention, the composition of the gas-forming mixture and its rate of injection can be adjusted so that at least some of the gas is formed within the pores of the reservoir formation. In still another embodiment, an aqueous solution or dispersion of a foam-forming surfactant is injected, before, during or after the injection of the nitrogen gas-forming mixture, so that a release of gas from the well induces foaming and a foam-transporting of liquid out of the well.

Water-soluble amino nitrogen compounds, which contain at least one nitrogen atom to which at least one hydrogen atom is attached and are capable of reacting with an oxidizing agent to yield nitrogen gas within an aqueous medium, which are suitable for use in the present invention can comprise substantially any water-soluble ammonium salts of organic or inorganic acids, amines, amides and/or nitrogen-linked hydrocarbon-radical substituted homologues of such compounds as long as the substituted compounds react in a manner substantially equivalent to the parent compounds with respect to the production of nitrogen gas and by-products which are liquid or dissolve to form aqueous liquid which are substantially inert relative to the well conduits and reservoir formation. Examples of such compounds include ammonium chloride, ammonium nitrate, ammonium acetate, ammonium formate, ethylene diamine, formamide, acetamide, urea, benzyl urea, butyl urea, hydrazine, phenylhydrazine, phenylhydrazine hydrochloride, and the like. Such ammonium salts, e.g., ammonium chloride, ammonium formate or ammonium acetate are particularly suitable.

Oxidizing agents suitable for use in the present process can comprise substantially any water-soluble oxidizing agents capable of reacting with a water-soluble nitrogen-containing compound such as an ammonium salt or a urea or hydrazine compound as described above to produce nitrogen gas and the indicated types of by-products. Examples of such oxidizing agents include alkali metal hypochlorites (which can, of course, be formed by injecting chlorine gas into a stream of alkaline liquid being injected into the well), alkali metal or ammonium salts of nitrous acid, such as sodium or potassium or ammonium nitrite and the like. The alkali metal or ammonium nitrites are particularly suitable for use with nitrogen-containing compounds such as the ammonium salts.

Aqueous liquids suitable for use in the present invention can comprise substantially any relatively soft fresh water or brine. Such aqueous liquid solutions preferably have a total dissolved salt content of from about 1 to 100 ppm, and a total hardness in terms of calcium ion equivalents of no more than about 50 ppm.

Foam-forming surfactants suitable for use in the present invention can comprise substantially any which are capable of being dissolved or dispersed in an aqueous liquid solution containing the nitrogen-containing compound and oxidizing agent and remaining substantially inert during the nitrogen gas-producing reaction between the nitrogen-containing compounds and the oxidizing agent. Examples of suitable surfactants comprise non-ionic and anionic surfactants, commercially available sodium dodecylbenzene sulphonates, e.g., SIPONATE DS-10 (trade name), mixtures of the Siponate or similar sulphonate surfactants with sulphated polyoxyalkylated alcohol surfactants, e.g., the NEODOL (trade name) sulphate surfactants; sulphonate sulphate surfactant mixtures; petroleum sulphonates; BRYTON (trade name) sulphonates; PETRONATES and PYRONATES (trade names); fatty acid and tall oil acid soaps, e.g., ACTYNOL HEADS (trade name); non-ionic surfactants, e.g., TRITON X100 (trade name), and the like surfactant materials which are soluble or dispersible in aqueous liquids.

To increase the viscosity of the aqueous solution to an extent enhancing the effectiveness of the gas in the gas-lifting liquid of the present process, water-thickening agents may be added to the liquid, such agents comprising substantially any water-soluble polymer or gel capable of dissolving in an aqueous liquid solution containing the nitrogen-containing compound and oxidizing agent and remaining substantially inert during the nitrogen gas-producing reaction between them.

Examples of suitable water-thickening agents include Xanthan gum polymer solutions such as marketed under the trade names KELZAN or XANFLOOD; hydroxyethyl cellulose, carboxymethyl cellulose, guar gum and the like thickening agents. Such thickening agents are particularly effective within a well conduit. They retard the rising velocity of gas bubbles so that more liquid is removed by the rising gas, and thus such thickening agents are particularly effective in treatments in which most of the nitrogen gas is generated within the well.

The composition of the nitrogen gas-forming mixture should be correlated with the pressure, temperature and volume properties of the reservoir and well components. In general, the rate of gas formation tends to increase with increasing temperature and increasing concentration of reactants. With certain reactants the amount of gas production tends to be limited where the pressure is particularly high. By means of calculations and/or tests, the composition of the gas-forming mixture can be adjusted so that the volume of the liquid which contains or forms that mixture need to be no more than about the volume of the tubing string plus the volume of the annular space between the tubing string and the casing in order to generate an amount of gas that will displace enough liquid to readuce the hydrostatic pressure to less than the fluid pressure in the adjacent portion of the reservoir. Such a liquid can be circulated within the borehole by flowing it into the tubing string while flowing fluid out of the casing without injecting into the reservoir.

Alternatively, in certain situations, it is advantageous to cause a significant amount of flow of gaseous fluid from the reservoir to the well. In such situations the composition of the nitrogen gas-forming mixture can be adjusted relative to the ambient temperature and the pressure and temperature of the reservoir so that the rate of gas generation is slow enough to allow a significant portion of the gas-forming mixture to be displaced into the reservoir. The generation of gas within the reservoir tends to increase the fluid pressure adjacent to the well and, when gas is released from the well, to ensure a relatively large inflow of gaseous fluid into the well.

By way of example, reference is now made to a procedure for correlating the composition of the nitrogen gas-forming mixture with the reservoir properties and the selected duration of the treatment, wherein use is made of an amino nitrogen compound which is a salt or ammonia and an oxidizing agent which is an alkali metal or ammonium salt of nitrous acid as the gas-generating reactants. Such composition has a slower reaction rate than, for example, the composition comprising urea and hypochloride as reactants, and thus can be used in place of the latter to provide (a) a slower reaction rate at a given temperature and concentration or (b) a similar rate of reaction at a high temperature or concentration. Such reactants can also form relatively concentrated solutions which minimize the amount of water that must be injected to induce the gas generation in the selected location. In addition, since their reaction rate increases with increasing pH, the nitrogen gas-generating reaction rate of a solution of them can be buffered (a) at a relatively high pH at which the rate is relatively slow at the reservoir temperature by adding, for example, sodium acetate or other compatible buffer providing a near neutral or slightly alkaline solution; or (b) at a relatively low pH at which the rate is relatively fast at the reservoir temperature by adding, for example, a mixture of acidic acid and sodium acetate or other compatible buffer providing a slightly acidic solution.

In addition to being useful for initiating a sustained production of fluid from a dead well, such as a gas well or an oil well, the present process can also be used to displace a slug of treating liquid into a reservoir and then produce it back out of the reservoir without a need for employing swabbing equipment or gas which has been highly pressurized at a surface location. Such a treatment could comprise, injecting one or more fluids such as an oil solvent and/or acid, or scale-dissolving liquid with which it is desired to wash the perforations and/or near well zone by injecting and subsequently backflowing.

The injecting and subsequent backflowing of the treatment liquid may be conducted as follows. A sequence of one or more slugs of treating liquid is arranged to precede a slug or volume of the present gas-generating liquid which, if desired, may be followed by a slug or volume of inert aqueous liquid. Then, the sequence of liquids is spotted within or near the bottom of the well being treated; for example, by injecting the liquids sequentially into the well through a tubing string (and/or an annulus around it) so that the liquid already in the well is displaced into the reservoir and continuing the injection until the frontal portion of the treatment liquid is at or near the bottom of the well. Alternatively, the sequence can be such that the liquids are sequentially included within a stream of fluid which is being circulated into the well (through the annulus or tubing string) and terminating the fluid circulation when the frontal portion of the treating liquid is at or near the bottom of the well. The wellhead is then closed so that gas generated by the gas-generating liquid accumulates above the liquid within the well while it displaces the treating liquid into the reservoir. At least a portion of the so-accumulated nitrogen gas is then released in order to initiate a backflowing of the treating liquid from the reservoir into the well.

As will be apparent to those skilled in the art, where the well depth and/or tubing size is sufficient to accommodate a significant portion of the nitrogen gas-forming mixture, the composition of such a mixture can be adjusted so that a significant volume of pressurized gas will be formed. The injecting and producing of the treating liquid slug can be repeated a plurality of times, by closing the wellhead so that the accumulating gas injects the treating liquid slug and releasing gas so that the treating liquid flows back; and, then again closing the wellhead so that the displacement of treating liquid slug into the reservoir is repeated.

In an alternative procedure for initiating a sustained flow of production fluid from a well in which production has been prevented by the hydrostatic pressure of liquid in the well, gas generated by the gas-generating mixture is allowed to collect in at least one of the upper ends of the production tubing or the annulus. In one embodiment, fluid is circulated into the top of one well conduit and out the top of the other until a slug of the gas-generating liquid is present within at least one of the conduits. The top of the conduit containing the gas-generating liquid is then closed while the top of the other is left open. As the gas is generated it initially accumulates above the liquid in the so-closed conduit while displacing liquid down through the bottom of that conduit and out through the open top of the other conduit. Where the volume of the so-generated gas is injected within both of the conduits, at least some portions of the liquid are displaced by a gas-lifting type action of the generated gas. Where the gas-generating liquid is present within both of such conduits the tops of both may be left open.

In another alternative procedure for initiating a gas flow, a composition of a gas-generating liquid is correlated with the temperature and injectivity properties of the reservoir and injected into the reservoir in a manner such that a significant proportion of the gas is generated within the reservoir formation. Where desirable, a pair of well conduits such as a tubing string and the annulus between it and a surrounding pipe string can be utilized to relatively rapidly circulate a slug of the treatment liquid to the bottom of the well and then displace that liquid into the reservoir formation in a way which reduces the overall time for which the gas-generating liquid is exposed to the reservoir temperature before it has entered the reservoir formation. A particularly suitable gas-generating liquid for use in such a procedure is one in which the nitrogen-containing reactant is an ammonium salt and oxidizing reactant is an alkali metal or ammonium nitrite.

## Claims

1. A process for treating a well communicating with a hydrocarbon fluid-containing formation from which production is prevented by the hydrostatic pressure of liquid contained within the well, comprising displacing sufficient liquid from the well to reduce the hydrostatic pressure to less than the reservoir fluid pressure by means of gas, characterized in that at least one aqueous liquid solution is entered in the well, which solution forms or contains a nitrogen gas-forming mixture of (a) at least one water-soluble compound which contains at least one nitrogen atom to which at least one hydrogen atom is attached and is capable of reacting within an aqueous medium to yield nitrogen gas and by-products which are substantially inert to the components of the well and reservoir formation, (b) at least one oxidizing agent which is capable of reacting with said nitrogen-containing compound to form said gas and by-products, and (c) an aqueous liquid which is capable of dissolving or homogeneously dispersing said nitrogen-containing compound, the oxidizing agent and the by-products of the nitrogen gas-producing reaction.

2. The process according to claim 1, wherein the well comprises at least two conduits that are in communication near the lower ends thereof, and the generated gas is collected in one of the conduits near the top thereof, and at least part of the liquid in the well is displaced from the well via the other conduit.

3. The process according to claim 2, in which the gas-forming mixture is injected into one of the conduits.

4. The process according to claim 1, in which the gas-forming mixture is injected into a production tubing string present in the well, at a rate such that substantially all of the nitrogen gas produced by each increment of the injected fluid is produced while that increment of the fluid is in the tubing string and substantially all of the so-generated gas is accumulated at the top of the tubing string.

5. The process according to claim 1, in which the gas-forming mixture is injected at least partly into the formation.

6. The process according to claim 1, comprising the consecutive steps of:

injecting into the well a slug of treating liquid;

injecting into the well behind the treating liquid slug at least one aqueous liquid solution which forms or contains the nitrogen gas-forming mixture;

closing the well and allowing the generation of nitrogen gas to displace at least a portion of the treating liquid slug to the location to be treated;

treating the location by the treating liquid; and

producing fluid from the well by outflowing gas generated by the nitrogen gas-forming mixture, so that the treating liquid slug is back-flowed out of the well.

7. The process according to any one of the claims 1—6, in which the nitrogen gas forming compound is salt of ammonia and the oxidizing agent is an alkali metal or ammonium nitrite.

8. The process according to any one of the claims 1—6, in which the nitrogen gas-forming mixture consists essentially of an aqueous solution of ammonium chloride and sodium nitrite.

9. The process according to any one of the claims 1—6, in which the nitrogen gas-forming mixture consists essentially of an aqueous solution of urea and sodium hypochlorite.

10. The process according to any one of the claims 1—6, in which the nitrogen gas-forming mixture consists essentially of an aqueous solution of urea and sodium nitrite.

11. The process according to any one of the claims 1—10, in which the injected solution contains a buffering agent for maintaining a reaction rate controlling pH.

12. The process according to any one of the claims 1—11, in which the injection into the well of the nitrogen gas-forming mixture is accompanied by an injection into the well of an aqueous liquid solution or dispersion of a foam-forming surfactant.

13. The process according to any one of the claims 1—12, in which the injection into the well of the nitrogen gas-forming mixture is accompanied by an injection into the well of an aqueous liquid solution or dispersion of a water-thickening agent.

## Revendications

1. Un procédé de traitement d'un puits communiquant avec une formation contenant un fluide hydrocarboné dont la production est empêchée par la pression hydrostatique d'un liquide contenu dans le puits, selon lequel on déplace au moyen d'un gaz une quantité suffisante de liquide du puits pour réduire la pression hydrostatique à un niveau plus bas que la pression du fluide dans le réservoir, caractérisé en ce qu'on introduit dans le puits au moins une solution liquide aqueuse, laquelle solution forme ou contient un mélange formateur d'azote gazeux de (a) au moins un composé soluble dans l'eau qui contient au moins un atome d'azote auquel au moins un atome d'hydrogène est fixé et est capable de réagir avec un milieu aqueux pour donner de l'azote gazeux et des sous-produits sensiblement inertes envers les constituants du puits et de la formation réservoir, (b) au moins un agent oxydant qui est capable de réagir avec le composé contenant de l'azote pour former le gaz et les sous-produits et (c) un liquide aqueux qui est capable de dissoudre ou de disperser de manière homogène le composé contenant de l'azote, l'agent oxydant et les sous-produits de la réaction produisant l'azote gazeux.

2. Un procédé selon la revendication 1, dans lequel le puits comprend au moins deux conduits qui sont en communication près de leurs extrémités inférieures, et le gaz produit est recueilli dans un des conduits près de son sommet, et au moins une partie du liquide dans le puits est évacuée du puits par l'autre conduit.

3. Un procédé selon la revendication 2, dans lequel le mélange formant le gaz est injecté dans un des conduits.

4. Un procédé selon la revendication 1, dans lequel le mélange formant le gaz est injecté dans un train de tiges de production présent dans le puits, à un débit tel que la quasi-totalité de l'azote gazeux produit par chaque portion du fluide injecté soit produite tandis que cette portion du fluide se trouve dans le train de tiges et que la quasi-totalité du gaz ainsi produit s'accumule au sommet du train de tiges.

5. Un procédé selon la revendication 1, dans lequel le mélange formant le gaz est injecté au moins partiellement dans la formation.

6. Un procédé selon la revendication 1, comprenant les étapes successives selon lesquelles:

on injecte dans le puits un bouchon de liquide de traitement;

on injecte dans le puits derrière le bouchon de liquide de traitement au moins une solution liquide aqueuse qui forme ou contient le mélange formant de l'azote gazeux;

on ferme le puits et on permet la production d'azote gazeux de manière à déplacer au moins une portion du bouchon de liquide de traitement vers l'endroit à traiter;

on traite cet endroit par le liquide de traitement; et

on extrait du fluide du puits en faisant écouler à l'extérieur le gaz produit par le mélange formant de l'azote gazeux, de manière que le bouchon de liquide de traitement soit refoulé hors du puits.

7. Un procédé selon l'une quelconque des revendications 1 à 6, dans lequel le composé formant de l'azote gazeux est un sel d'ammonium et l'agent oxydant est un nitrite de métal alcalin ou d'ammonium.

8. Un procédé selon l'une quelconque des revendications 1 à 6, dans lequel le mélange formant de l'azote gazeux est constitué essentiellement d'une solution aqueuse de chlorure d'ammonium et de nitrite de sodium.

9. Un procédé selon l'une quelconque des revendications 1 à 6, dans lequel le mélange formant de l'azote gazeux est constitué essentiellement d'une solution aqueuse d'urée et d'hypochlorite de sodium.

10. Un procédé selon l'une quelconque des revendications 1 à 6, dans lequel le mélange formant de l'azote gazeux est constitué essentiellement d'une solution aqueuse d'urée et de nitrite de sodium.

11. Un procédé selon l'une quelconque des revendications 1 à 10, dans lequel la solution injectée contient un agent de tamponnage pour maintenir un pH réglant la vitesse de réaction.

12. Un procédé selon l'une quelconque des revendications 1 à 11, dans lequel l'injection dans le puits du mélange formant de l'azote gazeux est accompagnée d'une injection dans le puits d'une solution ou dispersion liquide aqueuse d'un agent tensio-actif formant de la mousse.

13. Un procédé selon l'une quelconque des revendications 1 à 12, dans lequel l'injection dans le puits du mélange formant de l'azote gazeux est accompagnée d'une injection dans le puits d'une solution ou dispersion liquide aqueuse d'un agent épaississant l'eau.

## Patentansprüche

1. Verfahren zur Behandlung eines Bohrlochs, welches mit einer flüssige Kohlenwasserstoffe enthaltenden Lagerstätte in Berührung steht und welches infolge des hydrostatischen Druckes der in dem Bohrloch enthaltenden Flüssigkeit nicht fördern kann durch Verdrängen einer ausreichenden Flüssigkeitsmenge aus dem Bohrloch unter Herabsetzung des hydrostatischen Druckes auf unter den Druck, unter dem die Kohlenwasserstoff-Flüssigkeit in der Lagerstätte steht, mit Hilfe eines Gases, dadurch gekennzeichnet, daß man in das Bohrloch zumindest eine wäßrige Lösung einführt, welche ein Stickstoffgas-bildendes Gemisch enthält oder bildet, und das Gemisch (a) zumindest eine wasserlösliche Verbindung, die zumindest ein Stickstoffatom enthält, an dem zumindest ein Wasserstoffatom hängt, umfaßt die mit einem wäßrigen Medium unter Lieferung von Stickstoffgas und gegenüber den Bestandteilen im Bohrloch und in der Formation vorhandenen Bestandteilen inerten Nebenprodukten zu reagieren vermag; (b) zumindest ein Oxidationsmittel, welches mit der Stickstoff-haltigen Verbindung unter Freisetzung von Stickstoff und Bildung von Nebenprodukten zu reagieren vermag, und (c) eine wäßrige Flüssigkeit, welche die Stickstoff-haltige Verbindung, das Oxidationsmittel und die bei der Freisetzung von Stickstoff anfallenden Nebenprodukte in Lösung oder homogener Dispersion zu halten vermag, enthält.

2. Verfahren nach Anspruch 1, dadurch gekennzeichnet, daß das Bohrloch zumindest zwei Leitungen aufweist, die an ihrem unteren Ende kommunizieren, und das freigesetzte Gas sich in einer der Leitungen an ihrem oberen Teil gesammelt und zumindest ein Teil der Flüsigkeit in dem Bohrloch aus diesem über die andere Leitung verdrängt wird.

3. Verfahren nach Anspruch 2, dadurch gekennzeichnet, daß man das gasliefernde Gemisch in eine der Leitungen einführt.

4. Verfahren nach Anspruch 1, dadurch gekennzeichnet, daß man das gasliefernde Gemisch in ein Förderrohr des Bohrlochs mit solcher Geschwindigkeit einbringt, daß im wesentlichen der gesamte von einer Portion an eingeführter Lösung freigesetztem Gas gebildet wird, während sich diese Lösungsportion in dem Rohr befindet, und im wesentlichen das gesamte so entwickelnde Gas sich im oberen Teil des Rohres sammelt.

5. Verfahren nach Anspruch 1, dadurch gekennzeichnet, daß man das gasliefernde Gemisch zumindest zum Teil in die Lagerstätte einführt.

6. Verfahren nach Anspruch 1, gekennzeichnet durch folgende aufeinanderfolgende Verfahrensstufen:

in das Bohrloch wird ein Schlamm der Behandlungsflüssigkeit eingeführt,

hinter den Behandlungsflüssigkeits-Schlamm wird zumindest eine wäßrige Lösung in das Bohrloch eingeführt, welche das stickstoffliefernde Gemisch enthält oder bildet,

das Bohrloch wird verschlossen, die Stickstoffentwicklung erfolgt und zumindest ein Teil des Behandlungsflüssigkeit-Schlamms wird an den zu behandelnden Ort verdrängt,

dieser Ort wird mit der Behandlungsflüssigkeit behandelt und

die Förderung der Kohlenwasserstoff-Flüssigkeit aus dem Bohrloch durch ausströmendes Gas, welches durch das Stickstoff-bildende Gemisch entwickelt worden ist, findet statt, so daß der Behandlungsflüssigkeit-Schlamm wieder aus dem Bohrloch tritt.

7. Verfahren nach Anspruch 1 bis 6, dadurch gekennzeichnet, daß man als Stickstoffliefernde Verbindung ein Ammoniumsalz und als Oxidationsmittel ein Alkali- oder Ammoniumnitrit verwendet.

8. Verfahren nach Anspruch 1 bis 6, dadurch gekennzeichnet, daß man als Stickstofflieferndes Gemisch wäßrige Lösung von Ammoniumchlorid und Natriumnitrit verwendet.

9. Verfahren nach Anspruch 1 bis 6, dadurch gekennzeichnet, daß man als Stickstofflieferndes Gemisch eine wäßrige Lösung von Harnstoff und Natriumhypochlorit verwendet.

10. Verfahren nach Anspruch 1 bis 6, dadurch gekennzeichnet, daß man als Stickstofflieferndes Gemisch eine wäßrige Lösung von Harnstoff und Natriumnitrit verwendet.

11. Verfahren nach Anspruch 1 bis 10, dadurch gekennzeichnet, daß die einzuführende wäßrige Lösung eine Puffer enthält, um einen die Reaktion regelnden pH-Wert aufrecht zu erhalten.

12. Verfahren nach Anspruch 1 bis 11, dadurch gekennzeichnet, daß man gleichzeitig mit der Einführung des Stickstoff-liefernden Gemisches in das Bohrloch auch eine wäßrige Lösung oder Dispersion eines Schaumbildenden, oberflächenaktiven Mittels einführt.

13. Verfahren nach Anspruch 1 bis 12, dadurch gekennzeichnet, daß man gleichzeitig mit der Einführung des Stickstoff-liefernden Gemisches in das Bohrloch auch eine wäßrige Lösung oder Dispersion eines (Wasser)Verdickungsmittels einführt.